# EUROPÄISCHE PATENTANMELDUNG

(11) **EP 0 987 587 A2**
(43) Veröffentlichungstag der Anmeldung: **22.03.2000**
(21) Anmeldenummer: 99117600.9
(22) Anmeldetag: 07.09.1999
(51) Int. Cl.: G03B 27/22, G02B 27/10

(54) **Vorrichtung und Verfahren zum Aufspalten oder Zusammenführen von Licht**

(30) Priorität: 15.09.1998 DE 19842216
(71) Anmelder: Agfa-Gevaert Aktiengesellschaft, 51373 Leverkusen (DE)
(72) Erfinder: Müller, Peter, 82110 Germering (DE); Auer, Josef, 82008 Unterhaching (DE)

(57) **Zusammenfassung**

Vorrichtung zum Aufspalten von Licht eines Strahlengangs in unterschiedliche Farbanteile oder Zusammenführen von verschiedenfarbigem Licht in einen Strahlengang mit mehreren dielektrischen Spiegeln, die in dem Strahlengang so angeordnet sind, daß jeder Spiegel das Licht einer Farbe aus dem Strahlengang heraus oder in diesen hinein reflektiert. Mindestens ein dielektrischer Spiegel ist so angeordnet, daß der Einfalls- bzw. Ausfallswinkel des Lichts kleiner als 45° ist.

## Beschreibung

Die Erfindung betrifft eine Vorrichtung sowie ein Verfahren zum Aufspalten oder Zusammenführen von Licht nach dem Oberbegriff von Anspruch 1 bzw. Anspruch 14.

Eine derartige Vorrichtung wird beispielsweise in der DE-PS 40 40 498 beschrieben, bei der diese Vorrichtung zum Scannen verwendet wird. Hier wird ein fotografischer Film mit weißem Licht beleuchtet, das durch den Film tretende Licht in seine Farbanteile R, G, B aufgeteilt und mittels Sensoren in jeder Farbe aufgenommen. Das Licht tritt nach dem Negativ erst durch einen ersten dichroitischen Spiegel, der den Blauanteil des Lichts auf einen blauempfindlichen Sensor reflektiert. Anschließend tritt das Licht durch einen zweiten dichroitischen Spiegel, der den Grünanteil des Lichts auf einen grünempfindlichen Sensor reflektiert. Schließlich gelangt der verbleibende Anteil des Lichts - also der rote Anteil - auf einen rotempfindlichen Sensor. Die beiden dichroitischen Spiegel sind hier so angeordnet, daß der Eintrittswinkel des aufzuspaltenden Lichtstrahls 45° beträgt.

In der noch nicht veröffentlichten Patentanmeldung DE 198 36 337 wird eine Vorrichtung zum Zusammenführen mehrerer farbiger Lichtstrahlen in einem gemeinsamen Strahlengang beschrieben. Hier tritt das Licht roter LEDs ungebrochen durch zwei dichroitische Spiegel, während das Licht grüner LEDs auf den ersten dichroitischen Spiegel fällt und mit dem Strahl der roten LEDs zusammengeführt und am zweiten dichroitischen Spiegel das einfallende Licht blauer LEDs mit dem rotgrünen Licht vereinigt wird. Das zusammengeführte, mehrfarbige Licht trifft auf ein DMD (Digital Micromirror Device), von dem es moduliert und anschließend über ein Objektiv auf Fotopapier belichtet wird. Bei diesem Verfahren ist auch vorgesehen, das rote, grüne und blaue Licht nicht gemeinsam, sondern nacheinander auf das DMD und von dort auf Fotopapier zu leiten, wobei aber ebenfalls - ermöglicht durch die dichroitischen Spiegel - für alle Farben derselbe Strahlengang benutzt wird. Auch hier sind die dichroitischen Spiegel so angeordnet, daß der Eintrittswinkel des zu reflektierenden Strahls 45° beträgt.

Es hat sich jedoch gezeigt, daß die Belichtung des Fotopapiers bei dieser Anordnung nicht homogen erfolgt. So traten auf dem Fotopapier, auch bei einheitlicher Modulation aller Bildpunkte am DMD, lokal höhere Intensitäten in grün oder blau - also in den Farben, die über die dichroitischen Spiegel in den Strahlengang reflektiert wurden - auf.

Es war daher Aufgabe der Erfindung, eine Vorrichtung und ein Verfahren zum Zusammenführen oder Aufspalten von mehrfarbigem Licht so auszugestalten, daß der jeweils zusammengeführte oder aufgespaltene Strahl über die gesamte Fläche spektral möglichst homogen ist. Die Anordnung soll so erfolgen, daß bei einer Belichtung von lichtempfindlichem Material mit dem zusammengeführten Strahl auf dem Material keine Dichteschwankungen auftreten.

Gelöst wird die Aufgabe durch eine Vorrichtung und ein Verfahren mit den Merkmalen von Anspruch 1 bzw. Anspruch 14.

Erfindungsgemäß werden dielektrische Spiegel so im Strahlengang des transmittierten Strahls angeordnet, daß der Einfalls- bzw. Ausfallswinkel der reflektierten Strahlen möglichst klein, auf jeden Fall aber kleiner als 45° ist.

Vorteilhaft an den verwendeten dielektrischen Strahlteilern ist, daß der Übergang von nahezu vollständiger Transmission zu Reflexion innerhalb eines schmalen Spektralbereichs erfolgt. Dieser Übergangsbereich - die sogenannte Filterkante - ist dadurch gekennzeichnet, daß Licht dieser Wellenlänge zu 50 % reflektiert, zu 50 % transmittiert wird. Diese Kante verschiebt sich jedoch mit einer Änderung des Lichteinfallswinkels, da das Transmissionsverhalten der Spiegel von der durchstrahlten Weglänge in den dielektrischen Spiegelschichten abhängt. Die Änderung der Weglänge und damit die Änderung der Kantenlage ist dabei um so größer, je größer der Einfallswinkel ist.

Da die Lichtstrahlen in einer praktischen Anordnung aber aufgrund der geringen Entfernung zwischen Lichtquelle und Strahlteiler und der Ausdehnung der Strahlteiler nicht vollständig parallel, sondern mit vom Einfallswinkel des Zentralstrahls abweichenden Einfallswinkeln auf den Strahlteiler fallen, tritt im reflektierten Licht keine scharfe Filterkante, sondern eine Mischung vieler Strahlen unterschiedlicher Kanten auf Die scharf spektral selektierende Wirkung der dielektrischen Spiegel geht somit verloren.

Der Einfallswinkel und damit die Kantenverschiebung hängen geometrisch bedingt von der Lage eines Punktes auf dem Strahlteiler relativ zur Lichtquelle ab. Das hat zur Folge, daß das Spektrum der reflektierten Strahlung auf der Fläche des Strahlteilers räumlich variiert. Wird mit diesem räumlich inhomogenen Licht eine Belichtung vorgenommen, bei der die Ortsabhängigkeit der reflektierten Strahlung erhalten bleibt, so führt die ortsabhängige Variation der Filterkante zu einer spektral ungleichmäßigen Belichtung.

Um diesen negativen Einfluß der Variation der Fitterkante zu minimieren, wäre für den reflektierten Zentralstrahl ein Einfallswinkel von 0° optimal, da in diesem Fall die geometrisch bedingten Unterschiede aller vorkommenden Einfallswinkel die geringsten Weglängenunterschiede beim Durchlaufen der Spiegelschichten verursachen. In der Praxis ist dies jedoch nicht realisierbar, da der Strahl bei einem Einfallswinkel von 0° nur in sich selbst zurückreflektiert würde.

So muß ein Kompromiß zwischen sinnvollem Aufbau der Anordnung und möglichst kleinem Einfallswinkel gefunden werden. Ein gut realisierbarer Kompromiß liegt bei einem Einfallswinkel zwischen 25 und 35°, wobei ein Winkel von 30° zu bevorzugen ist. Eine weitere vorteilhafte Ausführung weist einen Winkel kleiner als 39° auf.

Eine derartige Spiegelanordnung wird bei Belichtungseinheiten, bei denen es erforderlich ist, die Intensität des Lichts in jeder Farbe einzeln zu steuern, dazu verwendet, das Licht weißer Lichtquellen zusammenzuführen, wobei durch die selektive Reflexion bzw. Transmission des Lichts an den dielektrischen Spiegeln jeweils von dem weißen Licht einer Lichtquelle nur das Licht einer Farbe weitergeleitet wird. Durch diese spektrale Selektion geht jedoch vom Licht der weißen Lichtquellen beim Zusammenführen viel verloren.

Deshalb ist es vorteilhaft, von vomherein Lichtquellen zu verwenden, die Licht in den Farben emittieren, die - einzeln ansteuerbar in einem Strahlengang zusammengeführt - zur Belichtung von Bildschirmen, Bilderwänden oder lichtempfindlichem Material besonders geeignet sind. Besonders vorteilhaft erwiesen sich hier LEDs als Lichtquellen. Diese sind mittlerweile als rote, grüne und blaue LEDs verfügbar und haben allgemein den Vorteil, daß sie sehr schnell ein- und ausschaltbar sind. Für die Belichtung von Fotopapier sind sie besonders geeignet, da ihr Spektrum sehr gut mit den Empfindlichkeitskurven von Fotopapier übereinstimmt.

Besonders bei der Belichtung von Fotopapier, aber auch generell bei der Verwendung von weißen Lichtquellen, werden zusätzlich Farbfilter vor den Lichtquellen angeordnet, so daß das Farbspektrum der Lichtquelle jeweils auf einen kleinen Bereich reduziert wird. Dadurch können beispielsweise die Wellenlängenbereiche des blauen und des grünen Lichts deutlich voneinander getrennt werden, so daß ein Lichtstrahl tiefblau ist, während der andere grün ohne Blauanteil ist, so daß die Emissionen von Blau und Grün nicht mehr im Blaugrünen überlappen. Durch dieses Filtern des grünen Lichts zu gelbgrünem Licht wird verhindert, daß die blauempfindliche Schicht des Fotopapiers bei der Belichtung mit grünem Licht mit anbelichtet wird.

Vorteilhafterweise sind die dielektrischen Spiegel so aufgebaut und angeordnet, daß sie das Licht grüner und roter LEDs in einen gemeinsamen Strahlengang reflektieren, während das Licht blauer LEDs ungehindert in demselben Strahlengang durch die Spiegel gelangt. Eine Wellenlängenverschiebung des roten Lichts ist unkritisch, da die rote Papierempfindlichkeitskurve nicht mit der grünen Kurve überlappt.

Das in einem Strahlengang zusammengeführte Licht wird dann zum Erzeugen eines farbigen Bildes auf einen Lichtmodulator geleitet, von dem es entsprechend der vorliegenden Bildinformation moduliert wird. Als Lichtmodulator können transmissive Lichtmodulatoren wie LCDs, PLZTs o. ä. oder aber reflexive Lichtmodulatoren wie DMDs verwendet werden. Zum Leiten des Lichts können Umlenkspiegel verwendet werden, die vorteilhafterweise auch in einem kleinen Einfallswinkel anzuordnen sind, falls es sich um dielektrische Spiegel handelt. Es ist aber auch möglich, den Lichtstrahl selbst für jeden Punkt zu modulieren, indem die Lichtquellen entsprechend der Bildinformation angesteuert werden, und dann den modulierten Lichtstrahl von Punkt zu Punkt weiter zu bewegen, so daß ein Bild entsteht. Das Bild wird dann an einem Bildschirm oder auf Fotopapier abgebildet.

Dielektrische Spiegel können ebensogut in einer Anordnung verwendet werden, die das Licht einer weißen oder mehrfarbigen Lichtquelle in verschiedene Farbanteile aufspaltet und die Information jeder Farbe einzeln analysiert.

Ein Beispiel hierfür sind Farbscanner, wie sie zum Abtasten von Negativfilmen verwendet werden. Das durch den Film tretende Licht einer weißen Lichtquelle wird in einen roten, einen grünen und einen blauen Anteil aufgeteilt, indem der grüne und rote Anteil an je einem dielektrischen Spiegel reflektiert werden, während der blaue Anteil des Lichts die Spiegel ungehindert passiert und ebenso wie die anderen Farbanteile schließlich von einem Sensor empfangen wird. Da die Sensoren, die schließlich den roten, grünen und blauen Anteil des Lichts messen, immer für einen genau definierten Spektralbereich empfindlich sind, ist auch hier wichtig, daß der Wellenlängenbereich des reflektierten Lichts wohldefiniert ist. Deshalb ist es auch hier vorteilhaft, wenn die dielektrischen Spiegel in einem möglichst kleinen Winkel zu dem einfallenden, aufzuspaltenden Strahl angeordnet sind.

Weitere Einzelheiten und Vorteile der Erfindung ergeben sich aus den Unteransprüchen im Zusammenhang mit der Beschreibung von Ausführungsbeispielen, die anhand der Zeichnungen eingehend erläutert werden.

Es zeigen:
- Fig. 1: eine Anordnung zum Zusammenführen verschiedenfarbiger Lichtstrahlen, wie sie aus dem Stand der Technik bekannt ist,
- Fig. 2: das Emissionsspektrum von typischen grünen und blauen LEDs, verglichen mit den Empfindlichkeitskurven eines typischen Fotopapiers,
- Fig. 3: eine erfindungsgemäße Anordnung zum Zusammenführen verschiedenfarbiger Lichtstrahlen,
- Fig. 4: ein Bildaufzeichnungsgerät mit einer erfindungsgemäßen Anordnung der dichroitischen Spiegel und
- Fig. 5: eine Einrichtung zum Abtasten von transparenten Negativfilmen.

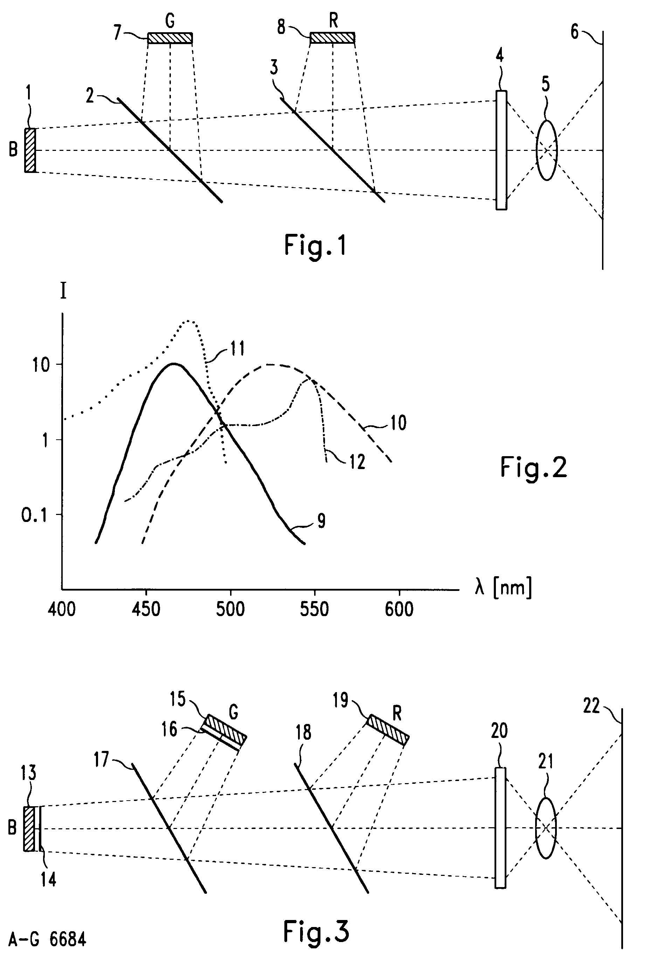

Fig. 1 zeigt eine Anordnung, bei der das Licht mehrerer farbiger Lichtquellen in einem Strahlengang zusammengeführt wird. Blaue LEDs 1 senden Licht aus, das in einem Einfallswinkel von 45° auf dichroitische Strahlteiler 2 und 3 trifft, diese durchläuft, an einem LCD 4 moduliert wird und schließlich über ein Objektiv 5 Fotopapier 6 belichtet. Das Licht grüner und roter LEDs 7 und 8 wird ebenfalls in einem Eintrittswinkel von 45° auf die den blauen LEDs gegenüberliegende Seite der Strahlteiler 2 und 3 geleitet und von diesen in den Strahlengang der blauen LEDs reflektiert. Das von den Strahlteilern reflektierte Licht der grünen und roten LEDs tritt durch das LCD, das entsprechend einer vorgegebenen Bildinformation angesteuert wird um das durchtretende Licht zu modulieren. Anschließend wird das modulierte Licht über ein Objektiv 5 auf das Fotopapier 6 gelenkt, um dieses zu belichten.

Bei der beschriebenen Anordnung zeigen sich jedoch nachteilige farbliche Inhomogenitäten auf dem belichteten Fotopapier, selbst wenn das LCD völlig farbneutral ist und alle Pixel des LCDs mit genau denselben Daten so angesteuert werden, daß durch jedes Pixel dieselbe Menge Licht treten kann. Auf dem Fotopapier 6 erscheinen etwas blauere und gelbere Regionen. Die Ursache hierfür liegt darin, daß die zu reflektierenden grünen Lichtstrahlen der LEDs die dichroitischen Spiegel besonders am Spiegelrand in einem von 45° deutlich abweichenden Einfallswinkel treffen. Da sich an dem einen Rand des Spiegels der Einfallswinkel der zu reflektierenden Strahlen vergrößert, an dem anderen Rand aber verkleinert, verschiebt sich die Farbe der reflektierten Strahlen an gegenüberliegenden Rändern des Strahlkegels in entgegengesetzte Richtungen. Da die Randstrahlen von unterschiedlichen Bereichen des Strahlkegels auf dem Papier jeweils auf andere Positionen abgebildet werden, wird das Papier in unterschiedlichen Bereichen mit einer etwas anderen Farbe anbelichtet. So wird beispielsweise bei der Belichtung mit grünen LEDs eine Seite des Fotopapiers mit etwas gelberem, die andere mit etwas blauerem Licht anbelichtet. Das hat zur Folge, daß eine Randregion auf dem Fotopapier etwas gelber, die andere etwas blauer erscheint.

Wie anhand von Fig. 2 zu sehen ist, überlappen sowohl die Emissionsspektren der blauen und grünen LEDs 9 und 10 als auch die blauen und grünen Empfindlichkeitskurven des Fotopapiers 11 und 12. Wenn das Fotopapier direkt mit dem von den LEDs emittierten Licht belichtet wird, so wird im überlappenden Bereich immer sowohl blau als auch grün anbelichtet, auch wenn nur eine der Farben in der Bildinformation enthalten ist. Beim Aufbelichten eines Bildes auf Fotopapier ist es jedoch nicht akzeptabel, daß bei einer Belichtung mit grünem Licht auch die blauempfindliche Schicht des Fotopapiers mit anbelichtet wird, weil dadurch der Bildeindruck völlig verfälscht werden kann.

Aus diesem Grund wird - wie in Fig. 3 dargestellt - vor den blauen LEDs 13 ein blauer Kurzpaßfilter 14, vor den grünen LEDs 15 ein grüner Langpaßfilter 16 eingebracht. Dadurch wird das blaue Licht, das den dichroitischen Spiegel 17 durchdringt, von dem grünen Licht, das dort reflektiert wird, spektral getrennt. Die dichroitischen Spiegel 17 und 18, die das Licht der grünen und roten LEDs 15 und 19 reflektieren, sind so angeordnet, daß der Einfallswinkel der LED-Strahlen jeweils 30° beträgt. Auch in dieser Anordnung wird das in den Spiegeln zusammengeführte Licht über ein LCD 20 und ein Objektiv 21 auf Fotopapier 22 geführt. Da die LED-Strahlen bei dieser erfindungsgemäßen Anordnung aber in einem steileren Winkel auf die Spiegel treffen, variiert das Spektrum - insbe sondere der grünen Strahlen - auch bei Reflexion am Spiegelrand deutlich weniger. Es wird vermieden, daß sich die mittels Filter getrennten Kanten des grünen und blauen Lichts bei der Reflexion an den Spiegelrändern so stark verschieben, daß die beiden Farben erneut spektral überlappen. So ist gewährleistet, daß die Belichtungen der Farbauszüge am Fotopapier farblich voneinander separiert und in sich homogener sind.

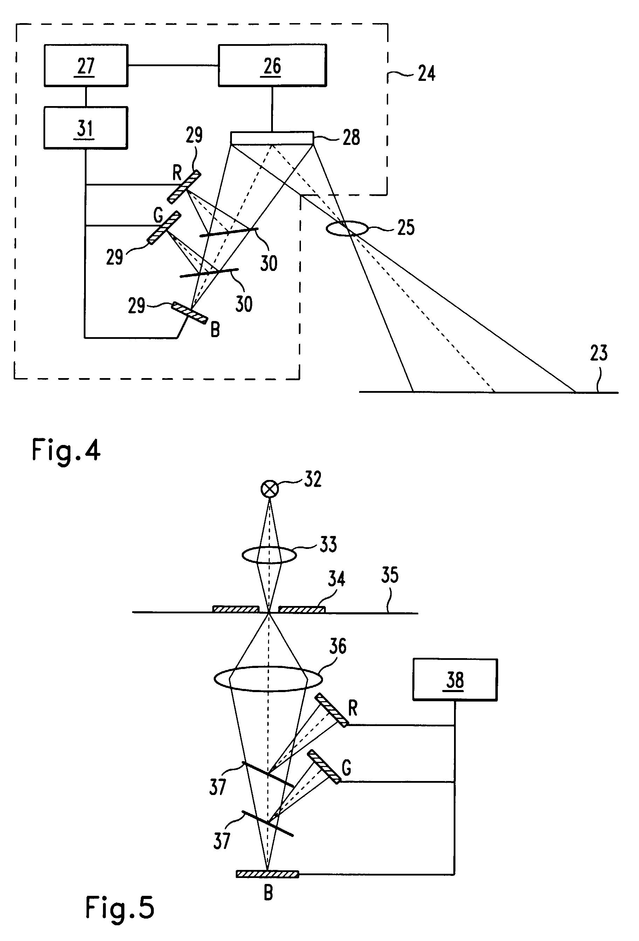

Fig. 4 zeigt eine Bildaufzeichnungseinrichtung zum Aufbelichten eines digitalen Bildes auf Fotopapier 23, bei der eine erfindungsgemäße Vorrichtung verwendet wird. Das digitale Bild wird von der digitalen Bildgeneriereinrichtung 24 erzeugt und über ein Objektiv 25 auf das Fotopapier 23 abgebildet. Eine Steuereinrichtung 26 steuert in Abhängigkeit von der digitalen Bildinformation, die an der Recheneinheit 27 bearbeitet wurde, ein DMD 28 pixelweise an. Das DMD 28 moduliert das Licht, das von den LEDs 29 emittiert und über dichroitische Spiegel 30 zusammengeführt wird und reflektiert es über das Objektiv 25 auf das Fotopapier 23. Die von den LEDs 29 abgegebene Lichtmenge wird von der Steuereinrichtung 31 gesteuert. Die LEDs 29 sind jeweils mit einem nicht dargestellten Farbfilter versehen, so daß das von ihnen abgegebene rote, grüne und blaue Licht an die Empfindlichkeit des Fotopapiers angepaßt und voneinander abgegrenzt wird. Erfindungsgemäß sind die grünen und blauen LEDs sowie deren zugehörige dichroitische Spiegel 30 so angeordnet, daß das Licht in einem 30⁰-Winkel auf die Spiegel auftrifft, von denen es in demselben Winkel auf das DMD 28 reflektiert wird.

Fig. 5 zeigt den Einsatz einer erfindungsgemäßen Vorrichtung in einem Farbscanner zum Scannen von Negativfilm. Eine Weißlichtlampe 32 beleuchtet durch ein Objektiv 33 und eine Spaltblende 34 den Negativfilm 37, um diesen abzutasten. Das durch den Film getretene Licht wird über ein Objektiv 36 auf dichroitische Spiegel 37 geleitet, von denen das Licht in einen roten, einen grünen und einen blauen Anteil aufgespalten wird, so daß jeder Anteil auf entsprechend sensibilisierte Sensoren R,G,B geleitet werden kann. Die an den Sensoren empfangenen Signale, die die Negativdichten des Films wiedergeben, werden in dem Bildspeicher 38 abgelegt. Von dort können sie zu einer nicht dargestellten Bildverarbeitungseinrichtung oder einem Kopiergerät weitergegeben werden.

Bei einer solchen Scaneinheit ist es ebenfalls vorteilhaft, die dichroitischen Spiegel 37 so anzuordnen, daß das mehrfarbige Licht in einem Einfallswinkel von 30° auf die Spiegel trifft. Dadurch ist die spektrale Aufweitung des reflektierten Lichtstrahls geringer als bei einem Einfallswinkel von 45°. So geht keine Information verloren, auch wenn die Sensoren nur in einem sehr schmalen Spektralbereich empfindlich sind.

## Patentansprüche

1. Vorrichtung zum Aufspalten von Licht eines Strahlengangs in unterschiedliche Farbanteile oder Zusammenführen von verschiedenfarbigem Licht in einen Strahlengang mit mehreren dielektrischen Spiegeln, die in dem Strahlengang so angeordnet sind, daß jeder Spiegel das Licht einer Farbe aus dem Strahlengang heraus oder in diesen hinein reflektiert, **dadurch gekennzeichnet**, daß mindestens ein dielektrischer Spiegel so angeordnet ist, daß der Einfalls- bzw. Ausfallswinkel des Lichts kleiner als 45° ist.

2. Vorrichtung nach Anspruch 1, dadurch gekennzeichnet, daß einer der das Licht in die Farbanteile aufspaltenden oder die Farbanteile zusammenführenden dielektrischen Spiegel so angeordnet ist, daß der Einfalls- bzw. Ausfallswinkel des Lichts kleiner als 45° ist.

3. Vorrichtung nach Anspruch 1, dadurch gekennzeichnet, daß der Einfalls- bzw. Ausfallswinkel kleiner als 39° ist.

4. Vorrichtung nach Anspruch 1, dadurch gekennzeichnet, daß der Einfalls- bzw. Ausfallswinkel zwischen 25° und 35° liegt.

5. Vorrichtung nach Anspruch 4, dadurch gekennzeichnet, daß der Einfalls- bzw. Ausfallswinkel 30° beträgt.

6. Vorrichtung nach Anspruch 1, dadurch gekennzeichnet, daß weiße Lichtquellen vorgesehen sind.

7. Vorrichtung nach Anspruch 1, dadurch gekennzeichnet, daß LEDs als Lichtquellen vorgesehen sind.

8. Vorrichtung nach Anspruch 6 oder 7, dadurch gekennzeichnet, daß Farbfilter vor den Lichtquellen angeordnet sind.

9. Vorrichtung nach Anspruch 8, dadurch gekennzeichnet, daß die dielektrischen Spiegel so im Strahlengang roter LEDs angeordnet sind, daß sie das Licht grüner und blauer LEDs in den Strahlengang roter LEDs reflektieren.

10. Vorrichtung nach Anspruch 1, dadurch gekennzeichnet, daß eine weiße oder mehrfarbige Lichtquelle vorgesehen ist.

11. Vorrichtung nach Anspruch 10, dadurch gekennzeichnet, daß ein Negativfilm im Strahlengang der Lichtquelle vor den dielektrischen Spiegeln angeordnet ist.

12. Vorrichtung nach Anspruch 11, dadurch gekennzeichnet, daß dielektrische Spiegel so in dem Strahlengang angeordnet sind, daß sie den grünen oder blauen und den roten Anteil des Lichts reflektieren.

13. Vorrichtung nach Anspruch 12, dadurch gekennzeichnet, daß Sensoren vorgesehen sind, die das reflektierte oder transmittierte Licht einer definierten Farbe aufnehmen.

14. Verfahren zum Aufspalten von Licht eines Strahlengangs in unterschiedliche Farbanteile oder Zusammenführen von verschiedenfarbigem Licht in einen Strahlengang, wobei das Licht durch selektive Reflexion an dielektrischen Spiegeln in verschiedene Farben aufgespalten oder das Licht mehrerer Farben durch selektive Reflexion an dielektrischen Spiegeln in einem Strahlengang zusammengeführt wird, dadurch gekennzeichnet, daß das Licht in einem Einfallswinkel kleiner 45° auf die Spiegel geführt werden.

15. Verfahren nach Anspruch 14, dadurch gekennzeichnet, daß das Licht von LEDs zusammengeführt wird.

16. Verfahren nach Anspruch 15, dadurch gekennzeichnet, daß das zusammengeführte Licht auf einen Lichtmodulator geleitet wird.

17. Verfahren nach Anspruch 16, dadurch gekennzeichnet, daß das Licht in Abhängigkeit von Bildinformation am Lichtmodulator moduliert wird.

18. Verfahren nach Anspruch 17, dadurch gekennzeichnet, daß das modulierte Licht auf Fotopapier abgebildet wird.
